# EUROPÄISCHE PATENTANMELDUNG

(11) **EP 1 902 924 A1**
(43) Veröffentlichungstag der Anmeldung: **26.03.2008**
(21) Anmeldenummer: 06019716.7
(22) Anmeldetag: 21.09.2006
(51) Int. Cl.: B62B 9/22

(54) **Vorrichtung zur Erzeugung einer Bewegung eines Kinderwagens**

(71) Anmelder: Spirit2go GmbH, 60549 Frankfurt am Main (DE)
(72) Erfinder: Thurow, Achim, 35321 Laubach (DE)
(74) Vertreter: Stenger, Watzke & Ring

(57) **Zusammenfassung**

Um eine Vorrichtung bereitzustellen, welche mit geringem wirtschaftlichen Aufwand herstellbar und einfach handhabbar ist und eine Automatisierung der Erzeugung der gewünschten Schaukelbewegung des Kinderwagens ermöglicht, wird mit der vorliegenden Erfindung eine Vorrichtung (1) zur Erzeugung einer Bewegung eines Kinderwagens, umfassend einen Antrieb (6), eine Energiequelle (8), eine Schwungmasse (7) und ein Gehäuse vorgeschlagen.

## Beschreibung

Die vorliegende Erfindung betrifft eine Vorrichtung zur Erzeugung einer Bewegung eines Kinderwagens.

Es ist allgemein bekannt, daß üblicherweise sehr gut federnd gelagerte Kinderwagen zur Beruhigung eines darin liegenden Kindes bewegt werden. In der Regel wird am Griff des Kinderwagens oder einem hervorstehenden Element und damit über einen Hebel von Hand eine Bewegung erzeugt, die den Kinderwagen in eine weitgehend gleichförmige Schaukel- oder Rüttelbewegung versetzt. Diese Bewegung wirkt beruhigend auf das Kind.

Der vorliegenden Erfindung liegt die **Aufgabe** zugrunde, eine Vorrichtung bereitzustellen, welche mit geringem wirtschaftlichen Aufwand herstellbar und einfach handhabbar ist und eine Automatisierung der Erzeugung der gewünschten Schaukelbewegung des Kinderwagens ermöglicht.

Zur technischen **Lösung** dieser Aufgabe wird eine Vorrichtung mit den Merkmalen gemäß Anspruch 1 vorgeschlagen. Weitere Vorteile und Merkmale ergeben sich aus den Unteransprüchen und der nachfolgenden Beschreibung.

Die erfindungsgemäße Vorrichtung besteht aus einem Antrieb, einer Energiequelle und einer mit dem Elektroantrieb gekoppelten Schwungmasse. Diese Elemente sind in einem Gehäuse angeordnet. Die entstehende Einheit läßt sich an einem Kinderwagen anordnen und nach anschalten des Antriebs wird eine Schwingung in einer drehzahlabhängigen Frequenz erzeugt. Diese wird auf den Kinderwagen übertragen und versetzt diesen in die gewünschte Bewegung.

Zur Anordnung am Kinderwagen kann die Vorrichtung an der Gehäuseaußenseite eine Befestigungseinheit aufweisen. Dies kann beispielsweise ein einfacher Bügel sein, mit welchem die Vorrichtung beispielsweise am Griffbügel des Kinderwagens eingehängt wird. Auch andere Stellen des federgelagerten Gestelles sind dafür geeignet.

In vorteilhafter Weise ist der Antrieb ein Elektroantrieb. Dieser kann beispielsweise hinsichtlich der Drehzahl zur Bestimmung der gewünschten Frequenz geregelt werden. Alternative Antriebe sind beispielsweise ein Spiralfederaufzug, der mit einem Rad des Kinderwagens gekoppelt sein kann. Auf diese Weise kann die Spiralfeder aufgezogen werden und im Stand ablaufen.

Die Vorrichtung kann auch in das Gestell eines Kinderwagens integriert sein. Der Begriff Kinderwagen im Sinne der vorliegenden Erfindung umfaßt alle gängigen Kinderwagentypen, beispielsweise Sportwagen, Kombiwagen, Buggy, Baby-Jogger und dergleichen.

Die Vorrichtung kann darüber hinaus an der Außenseite zumindest teilweise gepolstert und beispielsweise mit weichem Stoff, Plüsch oder dergleichen überzogen sein. Insgesamt kann die Vorrichtung wie eine Figur, ein Stofftier oder dergleichen ausgestaltet sein. Sie ist somit auch geeignet, einfach in den Kinderwagen gelegt zu werden, um die gewünschte Schwingung zu erzeugen.

Als Energiequelle kommen herkömmliche Akkumulatoren in Betracht. Es kann sich um wiederaufladbare Akkumulatoren handeln und die Vorrichtung kann auch eine Ladeeinheit umfassen. Auf diese Weise läßt sie sich mit einer Netzstromquelle über ein Kabel verbinden und kann regelmäßig wieder aufgeladen werden.

Als Elektroantrieb kommt ein herkömmlicher Elektromotor in Betracht, der ein ausreichendes Drehmoment zu erzeugen in der Lage ist.

Die Schwungmasse wird auf den Elektromotor und die Gesamteinheit abgestimmt. Grundsätzlich kann es schon ausreichen, den Motor selbst exzentrisch im Gehäuse zu lagern und seine eigene Masse als Schwungmasse zu verwenden. Im übrigen kommt als Schwungmasse ein ausreichend schweres Körperelement in Betracht, beispielsweise aus Metall, welches exzentrisch an der Antriebswelle des Elektromotors angeordnet ist.

Gemäß weiteren vorteilhaften Vorschlägen kann die Vorrichtung beispielsweise um einen Timer ergänzt werden. Dies ermöglicht, daß nach einer gewissen Zeit ein Signal gegeben wird, um nach dem Kind zu sehen. Der Signalgeber kann optisch und/oder akustisch ausgebildet sein.

Darüber hinaus kann die Vorrichtung eine Akustikeinheit aufweisen, das heißt beispielsweise einen CD-Player, einen MP3-Player, eine Radio oder dergleichen. Auf diese Weise können beispielsweise Musikstücke aber auch aufgenommene Sprachsignale und dergleichen abgespielt werden, was die Beruhigung des Kindes fördern kann.

Die Erfindung ist mit geringem wirtschaftlichen Aufwand herstellbar und leicht handhabbar. Maßnahmen wie Stoßsicherung, abnehmbare Bezüge, Gestaltung und dergleichen können je nach Einsatzfall umgesetzt werden.

Weitere Vorteile und Merkmale ergeben sich aus der folgenden Beschreibung anhand der Figuren. Dabei zeigen:

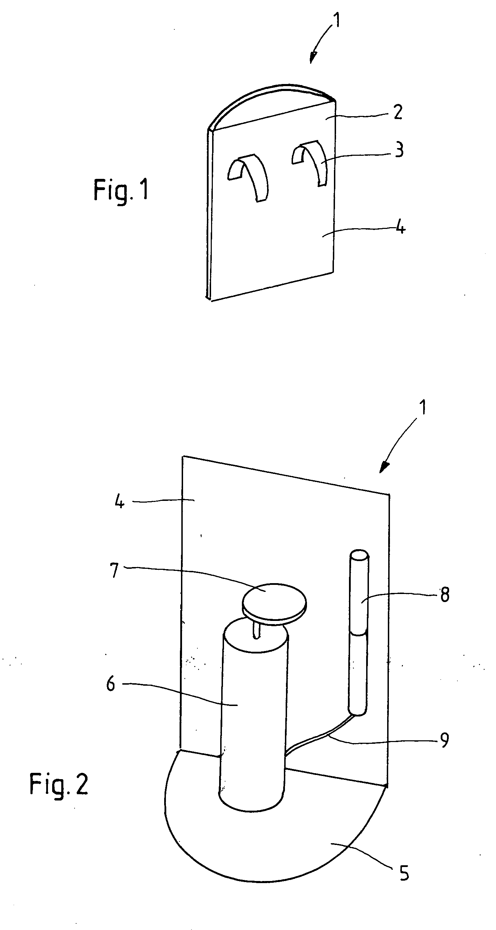

- Fig. 1: eine schematische perspektivische Darstellung für ein Ausführungsbeispiel einer erfindungsgemäßen Vorrichtung und
- Fig. 2: eine schematische Darstellung eines Einblickes in das geöffnete Gehäuse.

In den Figuren gezeigte gleiche Elemente sind mit gleichen Bezugszeichen bezeichnet.

Die Vorrichtung 1 umfaßt ein Gehäuse 2, welches im gezeigten Ausführungsbeispiel zwei Bügelelemente 3 aufweist, welche an einer Rückwand 4 des Gehäuses angeordnet sind. Diese Vorrichtung läßt sich im Federgestänge des Gestells eines Kinderwagens, am Griffbügel oder dergleichen einhängen. Ein nicht gezeigter Schalter ermöglicht die Inbetriebnahme.

An einer Bodenwand 5 ist ein Elektromotor 6 aufgestellt, der an seiner Antriebsachse eine exzentrisch angeordnete Schwungmasse 7 aufweist. Akkumulatoren 8 liefern die Energie für den Elektromotor.

Das beschriebene Ausführungsbeispiel dient nur der Erläuterung und ist nicht beschränkend.

### Bezugszeichenliste

- 1: Bewegungsvorrichtung
- 2: Gehäuse
- 3: Bügel
- 4: Rückwand
- 5: Bodenwand
- 6: Elektromotor
- 7: Schwungmasse
- 8: Akkumulatoren
- 9: Kabel

## Patentansprüche

1. Vorrichtung zur Erzeugung einer Bewegung eines Kinderwagens, umfassend einen Antrieb, eine Energiequelle, eine Schwungmasse und ein Gehäuse.

2. Vorrichtung nach Anspruch 1, **dadurch gekennzeichnet, daß** am Gehäuse eine Befestigungsvorrichtung angeordnet ist.

3. Vorrichtung nach einem der vorhergehenden Ansprüche, **dadurch gekennzeichnet, daß** der Antrieb ein Elektroantrieb ist.

4. Vorrichtung nach Anspruch 3, **dadurch gekennzeichnet, daß** die Drehzahl des Elektroantriebs regelbar ist.

5. Vorrichtung nach einem der vorhergehenden Ansprüche, **dadurch gekennzeichnet, daß** diese eine harmonische Schwingung erzeugt.

6. Vorrichtung nach einem der vorhergehenden Ansprüche, **dadurch gekennzeichnet, daß** die Gehäuseaußenseite zumindest teilweise gepolstert ist.

7. Vorrichtung nach Anspruch 6, **dadurch gekennzeichnet, daß** die Polsterung einen weichen Stoff umfaßt.

8. Vorrichtung nach einem der vorhergehenden Ansprüche, **dadurch gekennzeichnet, daß** diese einen Timer umfaßt.

9. Vorrichtung nach einem der vorhergehenden Ansprüche, **dadurch gekennzeichnet, daß** diese einen Signalgeber aufweist.

10. Vorrichtung nach einem der vorhergehenden Ansprüche, **dadurch gekennzeichnet, daß** diese eine Akustikeinheit aufweist.
